# EUROPEAN PATENT APPLICATION

(11) **EP 4 376 439 A1**
(43) Date of publication of application: **29.05.2024**
(21) Application number: 23158235.4
(22) Date of filing: 23.02.2023
(51) Int. Cl.: H04R 1/28

(54) **PRESSURE ADJUSTING VALVE AND SPEAKER**

(30) Priority: 28.11.2022 US 202217994860
(71) Applicant: Panasonic Intellectual Property Management Co., Ltd., Osaka-shi, Osaka 540-6207 (JP)
(72) Inventor: ODORIBA, Yuki, Fukuoka, 812-8531 (JP)
(74) Representative: Eisenführ Speiser

(57) **Abstract**

A pressure adjusting valve is configured to be mounted on a housing of a device for an aircraft. The pressure adjusting valve includes a plurality of elastic members disposed in an opening portion of the housing. The plurality of elastic members are pressed against each other, and close the opening portion of the housing.

## Description

### TECHNICAL FIELD

The present disclosure relates to a pressure adjusting valve that adjusts pressure in a sealed housing and a speaker.

### BACKGROUND ART

JPH07-37431Y discloses a sealed speaker system in which a diaphragm of a speaker main body can be returned and maintained at an initial position without being affected by a pressure difference inside and outside a speaker cabinet. In this speaker system, the speaker main body is mounted in the sealed speaker cabinet, and the speaker cabinet is provided with a pressure adjusting valve having a function of maintaining a sealed state at a usual time and circulating air with the outside as necessary. Accordingly, the inside and the outside of the speaker cabinet are communicated with each other by communication or cutoff of the pressure adjusting valve, so that the pressure difference inside and outside the speaker cabinet can be eliminated, or the sealing of the speaker cabinet can be maintained.

### SUMMARY OF INVENTION

The present disclosure provides a pressure adjusting valve that adjusts pressure in a housing when a pressure difference occurs between an inside and an outside of the housing.

According to the present disclosure, there is provided a pressure adjusting valve mounted on a housing of a device for an aircraft. The pressure adjusting valve includes a plurality of elastic members disposed in an opening portion of the housing, and the plurality of elastic members are pressed against each other, and close the opening portion of the housing.

The pressure adjusting valve in the present disclosure can adjust pressure in the housing when a pressure difference occurs between an inside and an outside of the housing.

### BRIEF DESCRIPTION OF DRAWINGS

Fig. 1 is a schematic diagram of an aircraft and an inside of the aircraft.
Fig. 2 is a graph illustrating flight time of the aircraft and pressure change in the aircraft associated with a flight of the aircraft.
Fig. 3 is a cross-sectional view of a speaker provided with a pressure adjusting valve according to a first embodiment.
Fig. 4 is a cross-sectional view of a closed state of the pressure adjusting valve according to the first embodiment.
Fig. 5 is a diagram illustrating forces generated at a contact point of elastic members of the pressure adjusting valve according to the first embodiment.
Fig. 6 is a view of the pressure adjusting valve according to the first embodiment as viewed from an opening portion of a housing.
Figs. 7A and 7B are cross-sectional views illustrating operations of the pressure adjusting valve according to the first embodiment.
Figs. 8A and 8B are other cross-sectional views illustrating operations of the pressure adjusting valve according to the first embodiment.
Fig. 9 is a cross-sectional view illustrating the pressure adjusting valve according to another embodiment.
Fig. 10 is a cross-sectional view of a housing provided with the pressure adjusting valve according to the other embodiment.

### DESCRIPTION OF EMBODIMENTS

Hereinafter, embodiments will be described in detail with reference to the drawings as appropriate. However, an unnecessarily detailed description may be omitted. For example, a detailed description of a well-known matter or repeated descriptions of substantially the same configuration may be omitted. This is to avoid unnecessary redundancy in the following description and to facilitate understanding of those skilled in the art.

The accompanying drawings and the following description are provided for a thorough understanding of the present disclosure for those skilled in the art, and are not intended to limit a subject matter of the claims.

### (First Embodiment)

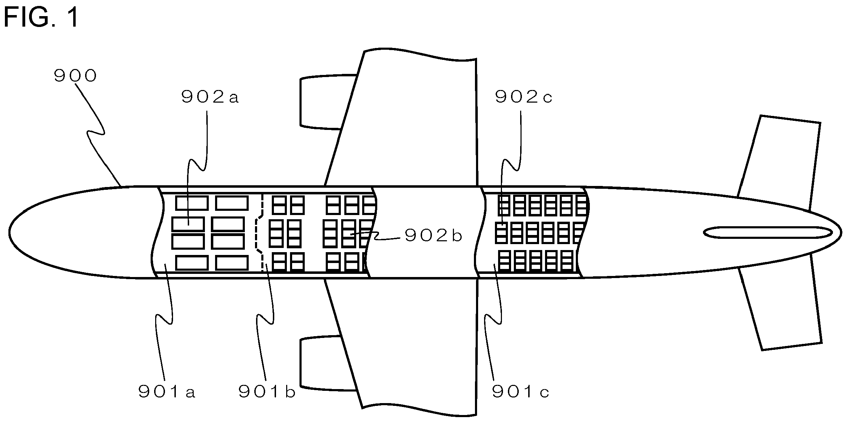

Hereinafter, a first embodiment will be described with reference to Figs. 1 to 10. An example of a speaker in which a pressure adjusting valve according to the first embodiment is mounted on an aircraft will be described.

### [1-1. Configuration]

### [1-1-1. Configuration of Aircraft]

Fig. 1 is a schematic diagram of an aircraft and an inside of the aircraft. An aircraft 900 includes at least seat rows 902a, 902b, and 902c installed in a cabin 901a (for example, a fast class), a cabin 901b (for example, a business class), and a cabin 901c (for example, an economy class) in the aircraft, respectively.

Speakers are arranged at various positions in the aircraft, such as the cabin 901a, the cabin 901b, the cabin 901c, the seat rows 902a, 902b, 902c, and cargo rooms of the aircraft. A configuration of the speaker will be described later.

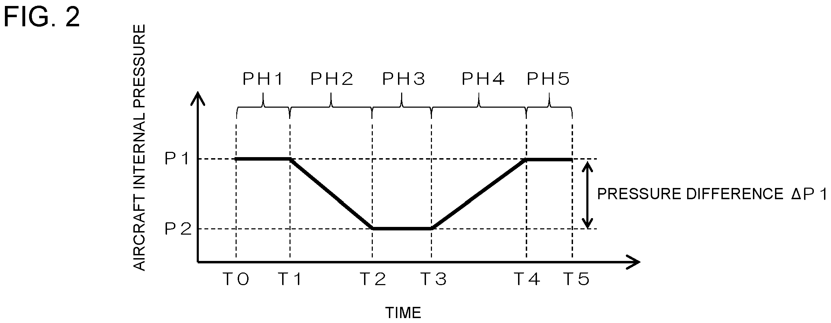

Fig. 2 is a graph illustrating flight time of the aircraft and change in an aircraft internal pressure associated with a flight of the aircraft. A period from start T0 of the flight to takeoff T1 is defined as PH1. A period from the takeoff T1 to ascending completion T2 is defined as PH2. A period from the ascending completion T2 to start T3 of descending is defined as PH3. A period from the start T3 of descending to landing T4 is defined as PH4. A period from the landing T4 to an operation end T5 is defined as PH5.

In the period PH1, since the aircraft travels on the ground, an aircraft internal pressure is a pressure P1 which is equal to that on the ground. In the period PH2, since the aircraft flies while ascending from the ground to the sky, the aircraft internal pressure decreases from P1 to an aircraft internal pressure P2 in the sky. In the period PH3, the aircraft flies in the sky, and the aircraft internal pressure is maintained at P2. In the period PH4, since the aircraft flies while descending from the sky to the ground, the aircraft internal pressure increases from P2 to P1. In the period PH5, since the aircraft travels on the ground, the aircraft internal pressure is the pressure P1 which is equal to that on the ground.

In aircraft operation, a pressure difference between the aircraft internal pressure P1 and the aircraft internal pressure P2 is ΔP1. For example, P1 is 100 kPa, P2 is 80 kPa, and ΔP1 is 20 kPa.

### [1-1-2. Configuration of Speaker]

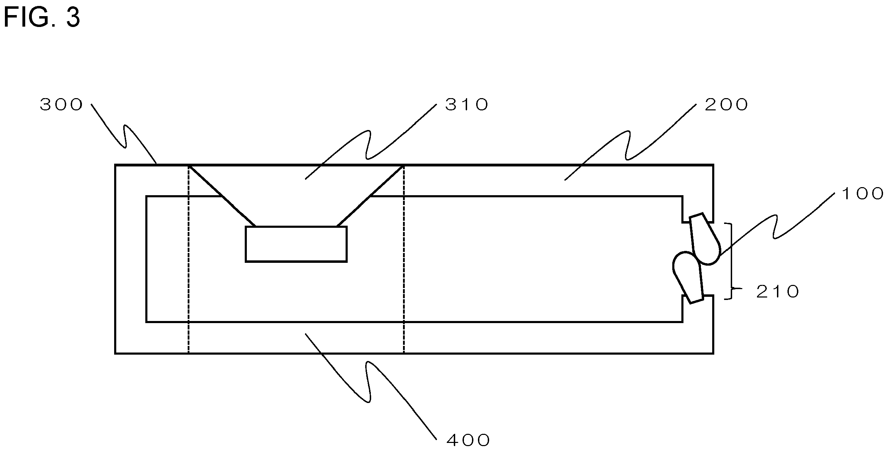

Fig. 3 is a cross-sectional view of the speaker provided with the pressure adjusting valve. A speaker 300 includes a pressure adjusting valve 100, a housing 200, and a diaphragm 310.

The pressure adjusting valve 100 is disposed in an opening portion 210 of a housing 200, and seals the housing 200 by closing the opening portion 210. By sealing the housing 200, sound quality of the speaker 300 can be improved. Specifically, a sound pressure of a bass area emitted from the speaker 300 can be increased.

The housing 200 includes an area 400 facing the diaphragm 310 in a direction in which the diaphragm 310 vibrates. In order to reduce an influence on the sound quality of the speaker 300, the pressure adjusting valve 100 is not provided in the area 400 facing the diaphragm 310.

Further, in order to reduce the influence on the sound quality of the speaker 300, the pressure adjusting valve 100 is disposed in an area of the housing 200 that is other than the area 400 facing the diaphragm 310 and is farther from the diaphragm 310. For example, as illustrated in Fig. 3, a pressure adjusting valve 100 is provided on a surface of the housing 200 that is farthest from a surface where the speaker 300 is provided in the housing 200.

### [1-1-3. Configuration of Pressure Adjusting Valve]

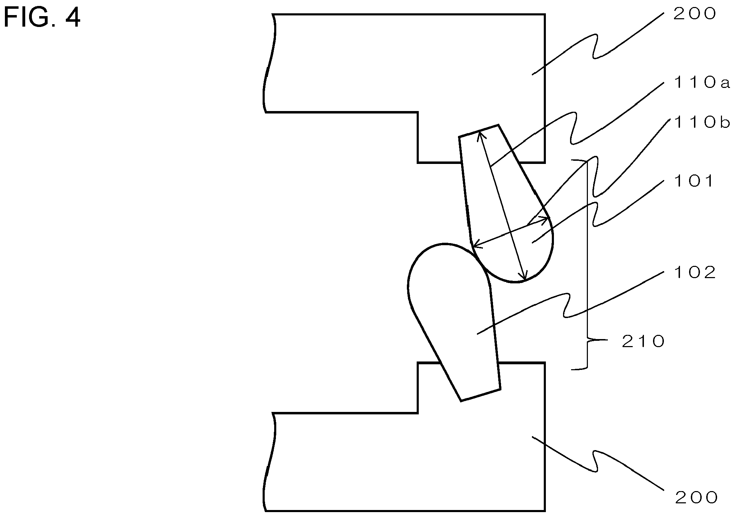

Fig. 4 is a cross-sectional view of the pressure adjusting valve in a closed state. The pressure adjusting valve 100 includes an elastic member 101 and an elastic member 102 made of an elastic material such as rubber. The elastic member 101 and the elastic member 102 are disposed in a state of being pressed against each other in the opening portion 210 of the housing 200. In order to facilitate deformation of the elastic member 101, in a cross section perpendicular to a surface of the opening portion 210, a length 110a of the elastic member 101 is longer than a width 110b of the elastic member 101, and the elastic member 102 also has a shape similar to that of the elastic member 101.

In the cross section perpendicular to the surface of the opening portion 210, front ends of the elastic member 101 and the elastic member 102 are curved surfaces, and curved surface portions other than the front ends of the elastic member 101 and the elastic member 102 are pressed against each other.

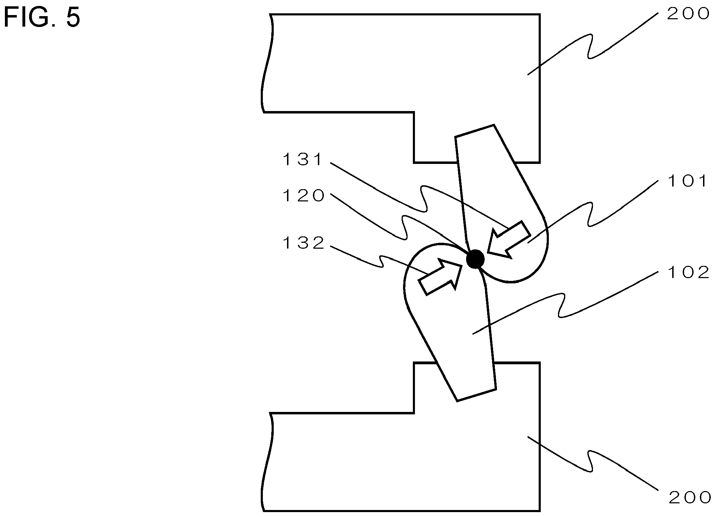

Fig. 5 is a diagram illustrating pressing forces generated at a contact point of the elastic members. The elastic member 101 and the elastic member 102 are in contact with each other at a contact point 120 and are pressed against each other. The pressing force is a force applied to the contact point 120 by each of the elastic member 101 and the elastic member 102. A pressing force 131 of the elastic member 101 and a pressing force 132 of the elastic member 102 are applied to the contact point 120.

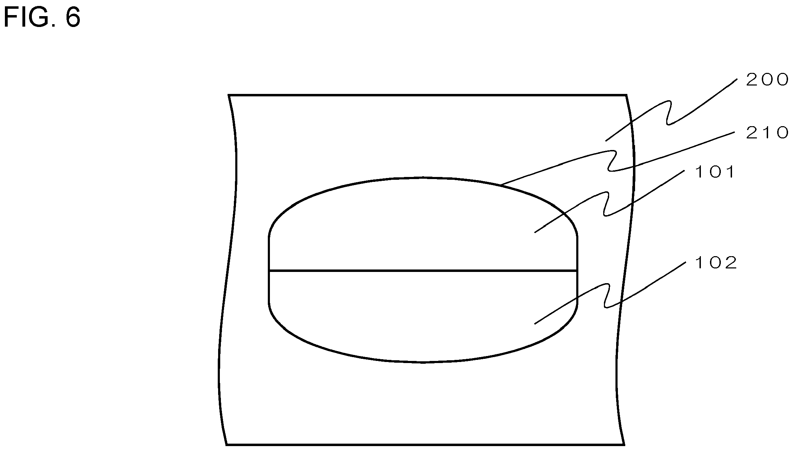

Fig. 6 is a view of the pressure adjusting valve 100 as viewed from the opening portion 210 of the housing 200. The opening portion 210 is closed by the elastic member 101 and the elastic member 102.

### [1-2. Operation]

Operation of the pressure adjusting valve 100 configured as described above will be described below. The pressure adjusting valve 100 adjusts pressure in the housing 200 in accordance with a pressure difference between the inside and the outside of the housing 200. Hereinafter, each operation will be described in detail.

### [1-2-1. Operation in Ascending of Aircraft]

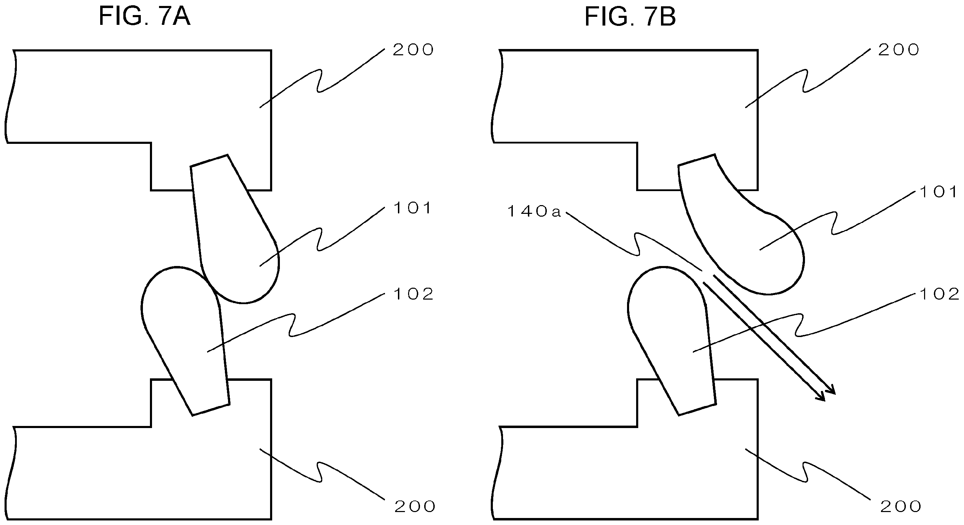

Figs. 7A and 7B are cross-sectional views illustrating operations of the pressure adjusting valve. Fig. 7Ais a cross-sectional view illustrating the pressure adjusting valve in a closed state while the aircraft travels on the ground,. Fig. 7B is a cross-sectional view illustrating the pressure adjusting valve in an opened state while the aircraft ascends.

During the period PH1 in which the aircraft travels on the ground, as illustrated in Fig. 7A, the pressure adjusting valve 100 is closed and the housing 200 is airtight (closed state). At this time, the pressure inside the housing 200 is equal to the pressure P1 on the ground.

During the period PH2 in which the aircraft is ascending, the aircraft internal pressure decreases, and the pressure difference occurs between the inside and the outside of the housing 200. At this time, the internal pressure of the housing 200 is higher than the external pressure of the housing 200, and the elastic member 101 and the elastic member 102 of the pressure adjusting valve 100 receive a force from the inside of the housing 200 toward the outside of the housing 200, and are deformed toward the outside of the housing 200 (at this time, airtightness of the housing 200 is maintained only by the deformation of the elastic member 101 and the elastic member 102).

When the aircraft further ascends and the pressure difference between the inside and the outside of the housing exceeds a predetermined pressure difference, the elastic member 101 and the elastic member 102 are further deformed to be in an open state 1 illustrated in Fig. 7B. In the open state 1, a vent hole 140a is formed by separating the elastic members 101 and 102 in contact with each other.

At this time, since the housing internal pressure is higher than the housing external pressure, air inside the housing 200 flows toward outside of the housing 200 via the vent hole 140a, and the pressure difference between the inside and the outside of the housing 200 is equalized (pressure equalized).

When the pressure difference between the inside and the outside of the housing 200 becomes equal to or less than the predetermined pressure difference, since the pressure difference between the inside and the outside of the housing 200 is substantially equalized, the deformed elastic member 101 and elastic member 102 return to an original state (an initial state), and the pressure adjusting valve 100 (the elastic member 101 and the elastic member 102) becomes in the closed state.

When the pressure difference between the inside and the outside of the housing 200 exceeds the predetermined pressure difference again during the ascending of the aircraft, the pressure adjusting valve 100 is brought into the open state 1, the air inside the housing 200 flows toward outside of the housing 200, the pressure difference between the inside and the outside of the housing 200 is equalized, and as a result, when the pressure difference between the inside and the outside of the housing 200 becomes equal to or less than the predetermined pressure difference, the pressure adjusting valve 100 becomes in the closed state again.

During the period PH3 in which the aircraft has finished ascending and flies in the sky, the aircraft internal pressure does not change, and a pressure difference equal to or greater than the predetermined pressure difference does not occur between the inside and the outside of the housing 200, so that the elastic member 101 and the elastic member 102 are in the closed state.

The predetermined pressure difference is a pressure difference when a force received by the elastic member 101 and the elastic member 102 due to the pressure difference between the inside and the outside of the housing 200 exceeds the pressing forces of the elastic member 101 and the elastic member 102. The pressing force can be freely set by changing a width, a length, and a material of the elastic member 101 and the elastic member 102. For example, the pressing force may be set within a range of 1 to 20 kPa.

The speaker 300 emits sound when the diaphragm 310 operates, but the pressure inside the housing 200 changes due to the operation of the diaphragm 310. In the case of the sealed housing, the pressure inside the housing 200 changes from a pressure P0 when the diaphragm is not operated to a pressure P' when the diaphragm is operated. A difference between P0 and P' is ΔP2.

While the speaker 300 is operating, the housing 200 is preferably in the sealed state. Therefore, the predetermined pressure difference is set to ΔP2 or more. Accordingly, while the speaker 300 is operating, the pressure adjusting valve 100 is maintained in the closed state, and the housing 200 is airtight. For example, when ΔP2 is 1 kPa, the predetermined pressure difference is set to a pressure at which pressure adjustment is not performed at a pressure at which the speaker operates, that is, 1 kPa or more.

The pressure difference ΔP2 on the ground and the pressure difference ΔP2 in the sky are different from each other, but a setting standard of the pressure may be on the ground or in the sky. Since the speaker operates in the sky, ΔP2 may be determined based on the pressure in the sky.

On the other hand, in the aircraft operation, as illustrated in Fig. 2, there is the pressure difference ΔP1 between the aircraft internal pressure P1 on the ground and the aircraft internal pressure P2 in the sky. In the housing 200 in the airtight state on the ground, the pressure difference between the inside and the outside of the housing 200 is ΔP1 in the sky and does not become larger than ΔP1. Therefore, by setting the predetermined pressure difference to ΔP1 or less, the pressure adjusting valve 100 operates at any time point during the operation of the aircraft. For example, when ΔP1 is 20 kPa, the predetermined pressure difference is set to 20 kPa or less.

As described above, the predetermined pressure difference may be set to a value equal to or larger than the pressure ΔP2 required to maintain the sealed state (airtight state) of the housing 200 during the operation of the speaker 300 and equal to or smaller than the pressure difference ΔP1 generated in the operation of the aircraft. Therefore, the pressing forces of the elastic member 101 and the elastic member 102 may be set to ΔP2 or more and ΔP1 or less. Taking the content described above as an example, the pressing forces of the elastic member 101 and the elastic member 102 may be set to 1 kPa or more and 20 kPa or less.

### [1-2-2. Operation in Descending of Aircraft]

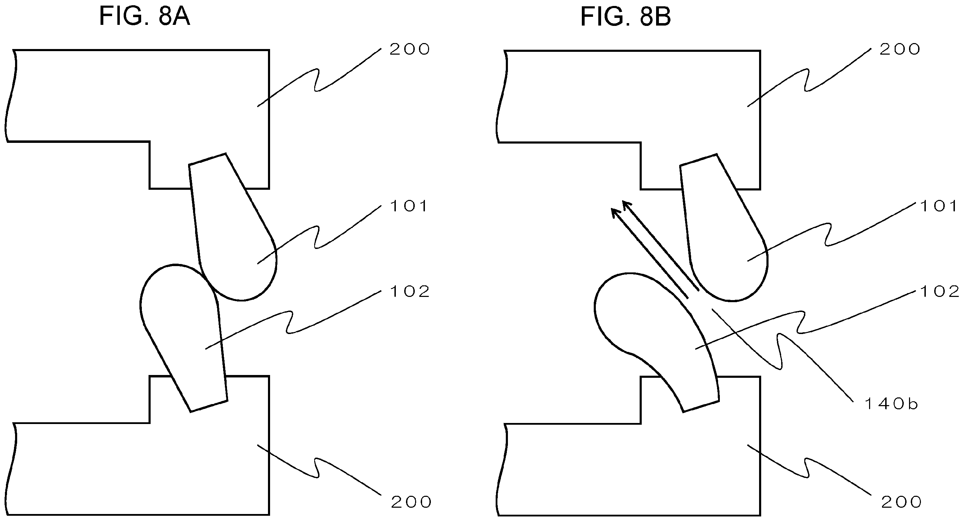

Figs. 8A and 8B are other cross-sectional views illustrating operations of the pressure adjusting valve. Fig. 8A is a cross-sectional view illustrating the pressure adjusting valve in the closed state while the aircraft flies in the sky. Fig. 8B is a cross-sectional view illustrating the pressure adjusting valve in an opened state while the aircraft descends.

During a period PH3 in which the aircraft flies in the sky, as illustrated in Fig. 8A, the pressure adjusting valve 100 is closed and the housing 200 is airtight. At this time, the pressure inside the housing 200 is equal to the aircraft internal pressure P2 in the sky.

During a period PH4 in which the aircraft descends, the aircraft internal pressure increases, and a pressure difference occurs between the inside and the outside of the housing 200. At this time, the internal pressure of the housing 200 is lower than the external pressure of the housing 200, and the elastic member 101 and the elastic member 102 of the pressure adjusting valve 100 receive a force from the outside of the housing 200 toward the inside of the housing 200, and are deformed toward the inside of the housing 200 (at this time, the airtightness of the housing 200 is maintained only by the deformation of the elastic member 101 and the elastic member 102).

When the aircraft further descends and the pressure difference between the inside and the outside of the housing exceeds a predetermined pressure difference, the elastic member 101 and the elastic member 102 are further deformed to become in an open state 2 illustrated in Fig. 8B. In the open state 2, a vent hole 140b is formed by separating the elastic member 101 and the elastic member 102 in contact with each other.

At this time, since the pressure (internal pressure) inside the housing 200 is lower than the pressure (external pressure) outside the housing, air flows into the housing 200 via the vent hole 140b, and the pressure difference between the inside and the outside of the housing 200 is equalized (pressure equalized).

When there is no pressure difference between the inside and the outside of the housing 200, the deformed elastic member 101 and elastic member 102 return to the original state, and the pressure adjusting valve 100 becomes in the closed state.

When the pressure difference between the inside and the outside of the housing 200 exceeds the predetermined pressure difference again during the descending of the aircraft, the pressure adjusting valve 100 becomes in the open state 2, and when there is no pressure difference between the inside and the outside of the housing 200, the pressure adjusting valve 100 becomes in the closed state again.

During the period PH5 in which the aircraft has finished descending and travels on the ground, the aircraft internal pressure does not change, and the pressure difference equal to or greater than the predetermined pressure difference does not occur between the inside and the outside of the housing 200, so that the elastic member 101 and the elastic member 102 are in the closed state.

### [1-3. Effects]

As described above, in the present embodiment, the speaker 300 includes the pressure adjusting valve 100, the housing 200, and the diaphragm 310. The pressure adjusting valve 100 is disposed in the opening portion 210 of the housing 200, and maintains the sealed state of the housing 200 by closing the opening portion 210. The pressure adjusting valve 100 includes the elastic member 101 and the elastic member 102 made of the elastic material. The elastic members are disposed in the state of being pressed against each other.

When the pressure difference between the inside and the outside of the housing 200 exceeds the pressure difference generated by the operation of the speaker, the elastic members 101 and 102 are deformed to become in the open state 1 or the open state 2. In the open state, the vent hole 140a or the vent hole 140b is formed. Air flows into or out via the vent hole 140a or the vent hole 140b, thereby adjusting the pressure difference between the inside and the outside of the housing 200. When there is no pressure difference, the deformed elastic member 101 and elastic member 102 return to the original state, and the pressure adjusting valve 100 becomes in the closed state.

Accordingly, in the operation of the aircraft, the housing 200 maintains the airtightness during the operation of the speaker 300, and even when the pressure difference between the inside and the outside of the housing 200 changes, the housing 200 and the diaphragm 310 are not deformed by adjusting the internal pressure of the housing 200. When the internal pressure of the housing 200 is not adjusted, the pressure (internal pressure) inside the housing 200 becomes high, and there is a possibility that the housing 200 is deformed and the diaphragm 310 does not perform an intended operation. However, by providing the pressure adjusting valve 100, the housing 200 is not deformed, the diaphragm 310 is operated as intended, and the airtightness can be maintained. In other words, the present disclosure provides high-quality sound to passengers or crew members in the aircraft.

### <Other Embodiments>

As described above, the first embodiment has been described as an example of the technique disclosed in the present application. However, the technology in the present disclosure is not limited thereto, and is also applicable to embodiments in which modifications, replacements, additions, omissions, and the like are made. Further, it is also possible to combine the components described in the first embodiment to form a new embodiment.

Therefore, other embodiments will be exemplified below.

In the first embodiment, the elastic member 101 and the elastic member 102 are made of the elastic material. All of the elastic members may not be the elastic material, and at least the contact point 120 and the connection portion with the housing 200 may be the elastic material. A metal or a resin to which an elastic material is applied may be used as the elastic member in the contact point 120 and the connection portion with the housing 200.

In the first embodiment, the two elastic members of the pressure adjusting valve 100 have been described. All of the elastic members may be pressed, and at least two or more elastic members may be provided. The number of elastic members is not limited to two. It should be noted that the two elastic members have a simpler configuration and higher airtightness.

In the first embodiment, it has been described that the elastic member 101 and the elastic member 102 are pressed against each other by the curved surface portions other than the front ends of the elastic member 101 and the elastic member 102. The portion to be pressed may be the surface of the elastic member. The portion to be pressed is not limited to the curved surface portion other than the front end.

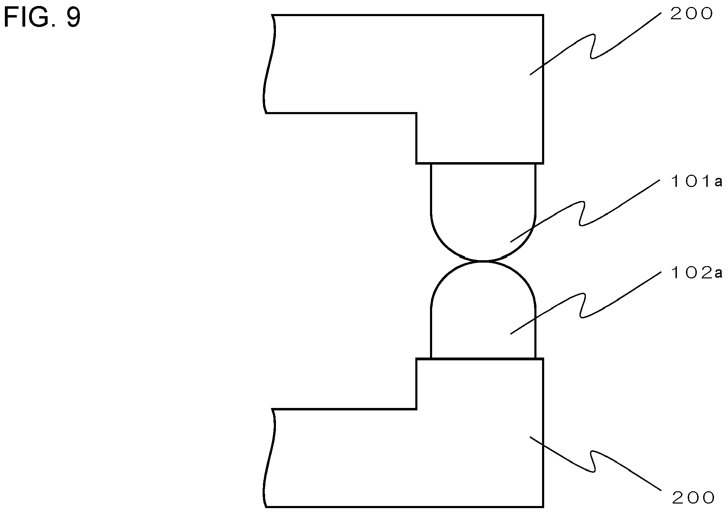

Fig. 9 is a cross-sectional view of a pressure adjusting valve according to another embodiment. As illustrated in Fig. 9, front ends of an elastic member 101a and an elastic member 102a may be pressed against each other.

In the first embodiment, it has been described that the elastic member 101 and the elastic member 102 are pressed against each other by the curved surface portions other than the front ends. Shapes of the front ends of the elastic member 101 and the elastic member 102 are not limited to the curved surfaces. The shape of each of the front ends of the elastic member 101 and the elastic member 102 may be a flat surface. Shapes of the front ends may be a combination of the flat surface and the curved surface.

In the first embodiment, the speaker 300 has been described as an example in which the pressure adjusting valve 100 is mounted. The pressure adjusting valve 100 may be mounted on the housing 200. Therefore, an object to which the pressure adjusting valve 100 is attached is not limited to the speaker 300.

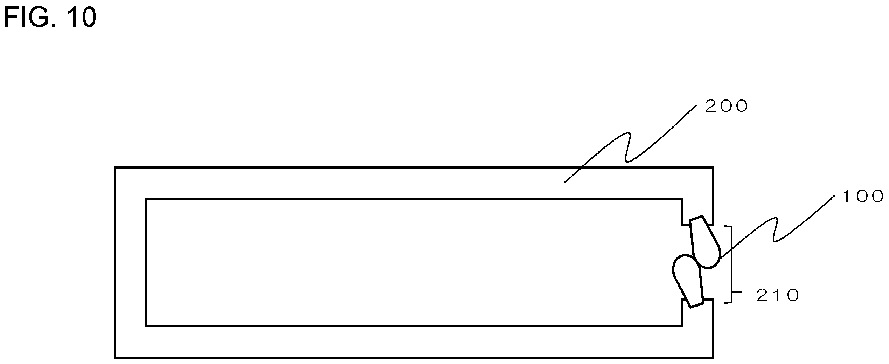

Fig. 10 is a cross-sectional view of a housing provided with the pressure adjusting valve according to the other embodiment. As illustrated in the drawing, the pressure adjusting valve 100 may be mounted on the housing 200. For example, by mounting the pressure adjusting valve 100 on the housing 200 sealed for waterproofing, it is possible to adjust the pressure difference between the inside and the outside of the housing 200 due to atmospheric pressure fluctuation.

In the first embodiment, the predetermined pressure difference is set in a range of 1 to 20 kPa, but may be set to 0 kPa in a case where the occurrence of the pressure difference is to be avoided, or may be set to 18 kPa in a case where sealability, such as waterproofing, is important. The pressure may be set to 30 kPa in a case where the operation is not performed in a normal flight and is desired to be performed when the pressure becomes higher than necessary.

It should be noted that the above-described embodiments are intended to illustrate the technique in the present disclosure, and thus various modifications, replacements, additions, omissions, and the like can be made within the scope of the claims or an equivalent scope thereof.

The present disclosure is applicable to a device that adjusts pressure in a housing. Specifically, the present disclosure is applicable to a speaker, a device that needs to be sealed, and the like.

## Claims

1. A pressure adjusting valve mounted on a housing of a device for an aircraft, the pressure adjusting valve comprising:
a plurality of elastic members disposed in an opening portion of the housing,
wherein the plurality of elastic members are pressed against each other, and close the opening portion of the housing.

2. The pressure adjusting valve according to claim 1,
wherein the plurality of elastic members are deformed by a pressure difference between an inside and an outside of the housing generated by ascending or descending of the aircraft, and adjusts pressure in the housing.

3. The pressure adjusting valve according to claim 1 or 2,
wherein a shape of a front end of at least one of the plurality of elastic members in a cross section perpendicular to a plane of the opening portion is a curved surface.

4. The pressure adjusting valve according to claim 3,
wherein the plurality of elastic members are pressed against each other by curved surfaces of portions other than the front ends.

5. A speaker comprising:
the pressure adjusting valve according to any one of claims 1 to 4;
a housing; and
a diaphragm provided in the housing,
wherein the pressure adjusting valve is disposed in an area of the housing other than a facing area of the housing which faces the diaphragm in a direction in which the diaphragm vibrates.

6. The speaker according to claim 5,
wherein in a case that a pressure difference between an inside and an outside of the housing is larger than a pressure generated in the housing by an operation of the speaker, and is smaller than an air pressure difference between a pressure in the aircraft on the ground and a pressure in the aircraft in the sky, the pressure adjusting valve adjusts the pressure difference between the inside and the outside of the housing.

7. A pressure adjusting valve mounted on a housing, the pressure adjusting valve comprising:
a plurality of elastic members disposed in an opening portion of the housing,
wherein the plurality of elastic members are pressed against each other, and close the opening portion of the housing.
